(19) **Europäisches Patentamt**
**European Patent Office**
**Office européen des brevets**

(11) **EP 3 753 727 A1**

(12) **EUROPEAN PATENT APPLICATION**
published in accordance with Art. 153(4) EPC

(43) Date of publication:
**23.12.2020 Bulletin 2020/52**

(51) Int Cl.:
**B32B 15/08** (2006.01)     **E04B 1/94** (2006.01)

(21) Application number: **19754428.1**

(86) International application number:
**PCT/JP2019/004803**

(22) Date of filing: **12.02.2019**

(87) International publication number:
**WO 2019/159876 (22.08.2019 Gazette 2019/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.02.2018 JP 2018024541**

(71) Applicant: **Dai Nippon Printing Co., Ltd.**
**Shinjuku-ku,**
**Tokyo 162-8001 (JP)**

(72) Inventors:
• **HORIO, Yoshiaki**
  **Tokyo 162-8001 (JP)**
• **OGASAWARA, Takeru**
  **Tokyo 162-8001 (JP)**
• **FURUTA, Satoshi**
  **Tokyo 162-8001 (JP)**
• **HAMAGUCHI, Tomoyuki**
  **Tokyo 162-8001 (JP)**

(74) Representative: **Müller-Boré & Partner**
**Patentanwälte PartG mbB**
**Friedenheimer Brücke 21**
**80639 München (DE)**

(54) **DECORATIVE SHEET AND DECORATIVE BOARD**

(57)     The present invention provides a decorative sheet on which fire does not easily spread even when the decorative sheet is laminated on a base having low thermal conductivity, and a decorative plate comprising the decorative sheet laminated on a base.

The present invention provide a decorative sheet for laminating on a base having a thermal conductivity of less than 0.1 W/(m·K) on a side to which the decorative sheet is bonded, wherein
(1) the decorative sheet comprises a metal layer having a thermal conductivity of 10 W/(m·K) or more,
(2) the decorative sheet comprises a plurality of layers containing a non-halogen-based thermoplastic resin, and
(3) the decorative sheet satisfies the following equation (I)

$$y \geq -0.0001x^2 + 0.123x - 12.26 \quad (I),$$

(I),

where x is the total thickness ($\mu$m) of the layers containing a non-halogen-based thermoplastic resin, and y is the thickness ($\mu$m) of the metal layer.

EP 3 753 727 A1

Fig. 1

## Description

Technical Field

The present invention relates to a decorative sheet and a decorative plate.

Background Art

Conventionally, decorative sheets are laminated on the surface of various articles in order to impart designability. For example, as a decorative plate used on the floor surface of a building, a decorative sheet is laminated on a base.

Since such a decorative sheet is laminated on the surface of a building, satisfying requirements to acquire certification of non-combustion, which indicates that the decorative sheet does not easily burn in case of fire, may be required. The requirements to acquire certification of non-combustion are predetermined requirements in regard to the total heat value, maximum heat generation rate, and generation of cracks and holes in a heat generation test in accordance with ISO5660-1 as defined in Article 2(9) of the Building Standards Act of Japan.

As such a non-flammable decorative sheet, Patent Literature 1, for example, suggests a decorative sheet in which a base sheet, a transparent resin layer, and a surface-protecting layer are laminated in this order; the thickness of each layer is in a specific range; and the decorative sheet contains a flame retardant.

The decorative sheet mentioned above has excellent non-flammability; however, whether a decorative sheet formed on a base has resistance against the spread of fire has not been investigated. For items constructed on a horizontal surface, such as decorative materials for floors, properties of suppressing the expansion of the burning area on the decorative sheet and preventing fire from easily spreading are important for the purpose of providing time for evacuation in case of fire.

In the decorative plate described above, a wooden base material is often used as a base. As a wooden base material, those having various structures are used. For example, a wooden base material in which cork is laminated to impart warmth retention properties, cushioning properties, etc. to the surface of a wooden plate, such as medium-density fiberboard (MDF) or high-density fiberboard (HDF), is sometimes used.

In a decorative plate using the base described above, cork having low thermal conductivity is used for the surface of the base, which reduces the thermal conductivity of the wooden base material to less than 0.1 W/(m·K). The above decorative plate is formed by laminating a decorative sheet on a base with low thermal conductivity; accordingly, the base acts as a heat-insulating material. Once the decorative sheet on the base catches fire and starts burning, it burns vigorously, and the fire spreads easily.

Accordingly, there is a demand for the development of a decorative sheet that has resistance against the spread of fire, even when it is laminated on a base having low thermal conductivity; and a decorative plate that includes the decorative sheet laminated on a base, and that has resistance against the spread of fire.

Citation List

Patent Literature

PTL 1: JP2015-182379A

Summary of Invention

Technical Problem

An object of the present invention is to provide a decorative sheet on which fire does not easily spread, even when the decorative sheet is laminated on a base having low thermal conductivity; and a decorative plate that includes the decorative sheet laminated on a base.

Solution to Problem

The present inventors conducted extensive research. As a result, they found that the object can be achieved by a decorative sheet for laminating on a base with a thermal conductivity of less than 0.1 W/(m·K), wherein the decorative sheet comprises a metal layer having a thermal conductivity of 10 W/(m·K) or more, and layers containing a non-halogen-based thermoplastic resin; and the total thickness (x) of the layers containing a non-halogen-based thermoplastic resin and the thickness (y) of the metal layer satisfy a specific equation. The present invention has thus been accomplished.

Specifically, the present invention relates to the following decorative sheets and decorative plates.

1. A decorative sheet for laminating on a base having a thermal conductivity of less than 0.1 W/(m·K) on a side to which the decorative sheet is bonded, wherein

(1) the decorative sheet comprises a metal layer having a thermal conductivity of 10 W/(m·K) or more,
(2) the decorative sheet comprises a plurality of layers containing a non-halogen-based thermoplastic resin, and
(3) the decorative sheet satisfies the following equation (I)

$$y \geq -0.0001x^2 + 0.123x - 12.26 \quad (I),$$

where x is the total thickness (μm) of the layers containing a non-halogen-based thermoplastic resin, and y is the thickness (μm) of the metal layer.

2. The decorative sheet according to Item 1, wherein the metal layer is an aluminum foil.
3. The decorative sheet according to Item 1 or 2, wherein the decorative sheet comprises the metal layer on a side that comes into contact with the base.
4. The decorative sheet according to any one of Items 1 to 3, wherein the decorative sheet comprises a transparent resin layer as one of the layers containing a non-halogen-based thermoplastic resin, and the transparent resin layer has a thickness of 60 μm or more.
5. The decorative sheet according to any one of Items 1 to 4, further comprising a surface-protecting layer.
6. The decorative sheet according to Item 5, wherein the surface-protecting layer is an ionizing radiation curable resin layer.
7. The decorative sheet according to Item 6, wherein the ionizing radiation curable resin layer is an electron beam curable resin layer.
8. The decorative sheet according to any one of Items 5 to 7, wherein the surface-protecting layer has a thickness of 15 μm or more.
9. The decorative sheet according to any one of Items 5 to 8, wherein the surface-protecting layer comprises fine particles, and the fine particles have an average particle size greater than the thickness of the surface-protecting layer.
10. The decorative sheet according to Item 9, wherein the fine particles are in the form of a vesicle formed by a supercritical reverse-phase evaporation method.
11. The decorative sheet according to any one of Items 1 to 10, wherein the total thickness of the layers containing a non-halogen-based thermoplastic resin is 110 to 600 μm.
12. The decorative sheet according to any one of Items 1 to 11, wherein the decorative sheet has a total thickness of 120 μm or more.
13. A decorative plate comprising the decorative sheet according to any one of Items 1 to 12 on a base, wherein the base has a thermal conductivity of less than 0.1 W/(m·K) on a side to which the decorative sheet is bonded.
14. The decorative plate according to Item 13, wherein the base comprises a cork layer as a layer on a side to which the decorative sheet is bonded.

Advantageous Effects of Invention

In the decorative sheet of the present invention, fire does not readily spread, even when the decorative sheet is laminated on a base having low thermal conductivity. Further, since the decorative plate of the present invention comprises the decorative sheet laminated on a base, fire does not readily spread.

Brief Description of Drawings

Fig. 1 is a schematic diagram illustrating an example of a layer structure of a decorative sheet according to the present invention.
Fig. 2 is a schematic diagram illustrating an example of a layer structure of a decorative sheet according to the present invention.
Fig. 3 is a schematic view illustrating an example of a layer structure of a base constituting a decorative plate according to the present invention.
Fig. 4 is a schematic view illustrating an example of a layer structure of a decorative plate according to the present invention.
Fig. 5 is a schematic view illustrating an example of a layer structure of a decorative plate according to the present invention.

Fig. 6 is a schematic view illustrating a method of testing resistance against the spread of fire.

Fig. 7 is a schematic view illustrating a method of testing resistance against the spread of fire.

Fig. 8 is a graph showing a relationship between the total thickness (x) of layers containing a non-halogen-based thermoplastic resin, and the thickness (y) of a metal layer.

Description of Embodiments

The decorative sheet and the decorative plate of the present invention are described in detail below. In the decorative sheet of the present invention, the surface opposite to the side of the decorative sheet to be laminated on a base is the so-called "front surface," which is a surface to be viewed when constructed on a floor or the like. Therefore, in the present specification, the direction of the surface of the decorative sheet opposite to the side to be laminated on the base is referred to as "above"; and the opposite direction, that is, the direction of the surface to be laminated on the base, is referred to as the "back" or "below." Similarly, in the present specification, the direction of the surface of the decorative plate on the decorative sheet side is referred to as "above"; and the opposite direction, that is, the direction of the surface on the base side, is referred to as the "back" or "below."

1. Decorative Sheet

The decorative sheet of the present invention is a decorative sheet for laminating on a base having a thermal conductivity of less than 0.1 W/(m·K) on a side to which the decorative sheet is bonded, wherein

(1) the decorative sheet comprises a metal layer having a thermal conductivity of 10 W/(m·K) or more,
(2) the decorative sheet comprises a plurality of layers containing a non-halogen-based thermoplastic resin, and
(3) the decorative sheet satisfies the following equation (I)

$$y \geq -0.0001x^2 + 0.123x - 12.26 \ (I),$$

where x is the total thickness ($\mu$m) of the layers containing a non-halogen-based thermoplastic resin, and y is the thickness ($\mu$m) of the metal layer.

The decorative sheet of the present invention has features (1) to (3) above, and the thickness (x) of the metal layer having a thermal conductivity in the specific range and the total thickness (y) of the thermoplastic resin-containing layers satisfy the above equation (I). Thus, by virtue of the combination of heat dissipation in the metal layer and flame retardancy due to the thickness of the layers containing a non-halogen-based thermoplastic resin, even when the sheet is laminated on a base with a thermal conductivity of less than 0.1 W/(m·K), the expansion of the burning area on the decorative sheet is suppressed in case of fire; and fire does not easily spread.

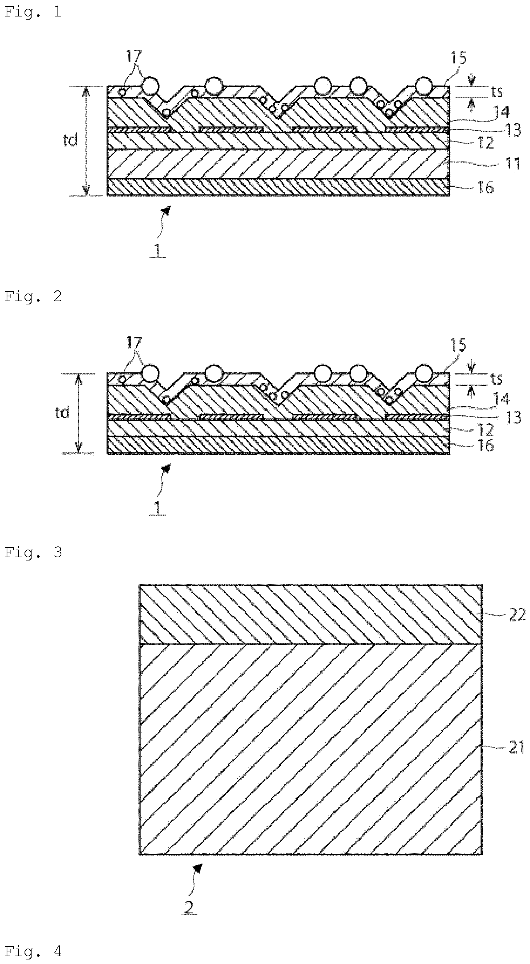

The layer structure is not limited, as long as the decorative sheet of the present invention satisfies requirements (1) to (3) above. For example, as shown in Fig. 1, an example of the layer structure of the decorative sheet of the present invention is a layer structure in which the decorative sheet comprises a synthetic resin backer layer 11, a base sheet 12, a picture pattern layer 13, a transparent resin layer 14, and a surface-protecting layer 15 laminated in sequence; and comprises a metal layer 16 on the back surface of the synthetic resin backer layer 11, i.e., on the side of the decorative sheet that comes into contact with a base. As shown in Fig. 2, the layer structure of the decorative sheet of the present invention may be a layer structure in which the decorative sheet does not have the synthetic resin backer layer; comprises the base sheet 12, the picture pattern layer 13, the transparent resin layer 14, and the surface-protecting layer 15 laminated in sequence; and comprises the metal layer 16 on the back surface of the base sheet 12. In the above examples of the layer structure, the layers containing a non-halogen-based thermoplastic resin are the transparent resin layer, the base sheet, and the synthetic resin backer layer. A decorative sheet having such a layer structure is used as a representative example, and is described in detail below.

Layers Containing Non-Halogen-Based Thermoplastic Resin

The decorative sheet of the present invention comprises a plurality of layers containing a non-halogen-based thermoplastic resin. Examples of the layers containing a non-halogen-based thermoplastic resin include the transparent resin layer, base sheet, and synthetic resin backer layer described later.

At least one of the layers containing a non-halogen-based thermoplastic resin may contain a non-halogen-based flame retardant. When at least one of the layers containing a non-halogen-based thermoplastic resin contains a non-halogen-based flame retardant, the non-halogen-based flame retardant is preferably contained in the base sheet or the synthetic resin backer layer; and more preferably in the base sheet, because the picture pattern layer is more easily recognized visually from the surface of the decorative sheet.

The non-halogen-based flame retardant is not particularly limited, as long as it is a flame retardant free of a halogen element. Examples include phosphorus-based flame retardants, nitrogen-based flame retardants, aluminum-based flame retardants, antimony-based flame retardants, magnesium-based flame retardants, boron-based flame retardants, zirconium-based flame retardants, and the like. Of these, phosphorus-based flame retardants, nitrogen-based flame retardants, and magnesium-based flame retardants are preferable; and phosphorus-based flame retardants and nitrogen-based flame retardants are more preferable, because the decorative sheet has increased resistance against the spread of fire. Nitrogen-based flame retardants are even more preferable, because they are uncolored and can reduce environmental burden. Phosphorus-nitrogen-based flame retardants that contain phosphorus and nitrogen are also preferably used. These non-halogen-based flame retardants can be used singly, or in a combination of two or more.

Examples of phosphorus-based flame retardants include phosphoric acid esters (e.g., tricresyl phosphate, trioctyl phosphate, and tris(monochloropropyl)phosphate), polyphosphates, and the like.

Examples of nitrogen-based flame retardants include inorganic nitrogen compounds such as ammonium carbonate; organic nitrogen compounds such as melamine, melamine sulfate, melamine cyanurate, dicyandiamide, triazine compounds, and guanidine compounds (such as guanidine sulfamate); and the like. Examples of nitrogen-based flame retardants also include phosphorus-based nitrogen-based flame retardants (e.g., ammonium dihydrogen phosphate).

Examples of aluminum-based flame retardants include aluminum hydroxide and the like.

Examples of antimony-based flame retardants include antimony trioxide, antimony pentoxide, barium metaborate antimonate, and the like.

Examples of magnesium-based flame retardants include magnesium hydroxide and the like.

Examples of boron-based flame retardants include zinc borate and the like.

When at least one of the layers containing a non-halogen-based thermoplastic resin contains a non-halogen-based flame retardant, the content of the non-halogen-based flame retardant in each of the layers containing a non-halogen-based flame retardant is preferably 8 mass% or more, more preferably 11 mass% or more, and even more preferably 15 mass% or more. Since the lower limit of the content of the non-halogen-based flame retardant is within the above range, the decorative sheet has further increased resistance against the spread of fire. The content of the non-halogen-based flame retardant in each of the layers containing a non-halogen-based flame retardant is also preferably 50 mass% or less, and more preferably 30 mass% or less. When the upper limit of the content of the non-halogen-based flame retardant is within the above range, the layer containing a non-halogen-based flame retardant exhibits more excellent strength.

Metal Layer

The decorative sheet of the present invention comprises a metal layer having a thermal conductivity of 10 W/(m·K) or more. The metal forming the metal layer is not particularly limited, as long as a thermal conductivity of 10 W/(m·K) or more can be achieved. Examples of the metal include aluminum, copper, silver, gold, iron, cast iron, stainless steel (e.g., SUS304), nickel, lead, zinc, and the like. Of these, aluminum and stainless steel are preferable, and aluminum is more preferable, because they are flexible and suitable for use as the metal layer in the decorative sheet. As the metal layer, aluminum foil is even more preferable, because it is more flexible and suitable for use as the metal layer in the decorative sheet.

The metal layer has a thermal conductivity of 10 W/(m·K) or more. If the thermal conductivity of the metal layer is less than 10 W/(m·K), the heat generated when the decorative sheet burns is hardly dissipated, and fire spreads easily. The thermal conductivity of the metal layer is preferably 10 W/(m·K) or more, and more preferably 100 W/(m·K) or more. The thermal conductivity of the metal layer is also preferably 400 W/(m·K) or less, and more preferably 300 W/(m·K) or less. When the upper limit of the thermal conductivity of the metal layer is within the above range, the coldness upon touching the surface can be further suppressed when the decorative sheet is used as a flooring material.

In the present specification, the thermal conductivity of the metal layer is a value measured by the hot disk method.

The specific gravity of the metal layer is not particularly limited; and is preferably 2 to 10, and more preferably 2 to 5. Since the upper limit of the specific gravity of the metal layer is within the above range, the weight of the decorative sheet is not overly heavy, resulting in further improved handling of the decorative sheet. Moreover, since the upper limit of the specific gravity of the metal layer is within the above range, the metal layer is not overly hard; this makes it easy to cut the metal layer, resulting in further improved processability of the decorative sheet. The lower limit of the specific gravity of the metal layer is not particularly limited. The smaller the specific gravity of the metal layer, the better. The lower limit is approximately within the above range.

In the layer structure of the decorative sheet, the metal layer is preferably laminated below the picture pattern layer described later, from the viewpoint of visually recognizing the picture pattern of the picture pattern layer from the upper surface of the decorative sheet. As shown in Figs. 1 and 2, the metal layer is more preferably laminated on the back surface of the base sheet, i.e., on the side of the decorative sheet that comes into contact with a base.

The decorative sheet of the present invention satisfies the following equation (I)

$$y \geq -0.0001x^2 + 0.123x - 12.26 \qquad (I),$$

where x is the total thickness ($\mu$m) of the layers containing a non-halogen-based thermoplastic resin, and y is the thickness ($\mu$m) of the metal layer.

In the above equation, x is the total thickness of the layers containing a non-halogen-based thermoplastic resin. In the decorative sheet mentioned in the above examples of the layer structure, the layers containing a non-halogen-based thermoplastic resin are the transparent resin layer, the base sheet, and the synthetic resin backer layer; and x is the total thickness of these layers. x is preferably 110 to 600 $\mu$m, and more preferably 120 to 400 $\mu$m. x in the above range facilitates adjustment so that the values of x and y more easily satisfy equation (I).

The decorative sheet of the present invention may include a curable resin layer, such as a back-side primer layer; however, since the curable resin layer is different from the non-halogen-based thermoplastic resin layers, it is not considered in equation (I).

In the above equation, y is the thickness of the metal layer. y is preferably 5 to 100 $\mu$m, and more preferably 10 to 50 $\mu$m. y in the above range facilitates adjustment so that the values of x and y more easily satisfy equation (I). Since the upper limit of y is within the above range, the weight of the decorative sheet is not overly heavy, resulting in further improved handling of the decorative sheet. Moreover, since the upper limit of y is within the above range, the metal layer can be easily cut, which further improves processability of the decorative sheet. Further, since the lower limit of y is within the above range, the metal layer has a strength suitable for processing; this makes lamination easy, resulting in further improved processability of the metal layer.

In the present specification, the thickness of each of the transparent resin layer, the base sheet, and the synthetic resin backer layer, for calculating y in equation (i); the thickness of the metal layer (i.e., y); and the thicknesses of other layers, such as the surface-protecting layer described later, were values obtained by photographing a cross-section of the decorative sheet that is planar in a direction parallel to the normal with a microscope at a magnification of 500X, 1000X, or the like depending on the thickness of each layer, and performing measurement.

Base Sheet

In the decorative sheet of the present invention, the base sheet is one of the layers containing a non-halogen-based thermoplastic resin. The base sheet is a synthetic resin sheet formed from polyolefin, polyester, polyacryl, polyamide, polyurethane, polystyrene, or the like. Of these, a synthetic resin sheet formed from polyolefin is preferable, and a synthetic resin sheet formed from polypropylene is more preferable.

The base sheet is preferably a layer containing a non-halogen-based flame retardant. The base sheet containing a non-halogen-based flame retardant ensures a highly safe and environmentally friendly decorative sheet.

The thickness of the base sheet is preferably 40 to 300 $\mu$m, and more preferably 60 to 200 $\mu$m. The base sheet may be colored, if necessary. The surface of the base sheet may also be subjected to surface treatment, such as corona discharge treatment, plasma treatment, or ozone treatment. Alternatively, a primer, which is a base paint for improving adhesion to an adjacent layer, may be applied.

Picture Pattern Layer

The picture pattern layer is formed of a patterned layer and/or solid colored layer. The picture pattern layer can be formed by printing, such as gravure printing, offset printing, and silk-screen printing. Examples of patterns on the patterned layer include wood-grain patterns, marble-grain patterns, textile patterns, leather patterns, geometric figures, characters, symbols, line drawings, various abstract patterns, and the like. The solid colored layer can be obtained by solid coloring. The picture pattern layer is formed of either the patterned layer or solid colored layer, or both.

The ink usable for the picture pattern layer can be obtained in the following manner. A mixture of one or more members selected from chlorinated polyethylene, chlorinated polypropylene and like chlorinated polyolefins; polyesters; polyurethanes formed from isocyanate and polyol; polyacrylic resins; polyvinyl acetates; polyvinyl chlorides; vinyl chloride-vinyl acetate copolymers; cellulose-based resins; polyamide-based resins; and the like is used as a vehicle. A pigment, solvent, various adjuvants, and the like are added to the mixture, and the result is formulated into an ink. Of these, from the viewpoint of environmental issues and adhesion to the printed surface, the use of a mixture of one or more members selected from polyesters, polyurethanes formed from isocyanate and polyol, polyacrylic resins, and polyamide-based resins is preferable.

Transparent Adhesive Layer

A transparent adhesive layer is placed between the picture pattern layer and the transparent resin layer, as necessary. For example, the transparent adhesive layer can be obtained by applying and drying a known adhesive for use in dry lamination, such as a two-component curable urethane resin.

The thickness of the transparent adhesive layer after drying is preferably about 0.1 to 30 $\mu$m, and more preferably about 1 to 5 $\mu$m.

Transparent Resin Layer

In the decorative sheet of the present invention, the transparent resin layer is one of the layers containing a non-halogen-based thermoplastic resin. The transparent resin layer can be suitably formed from a transparent non-halogen-based thermoplastic resin.

Specific examples of the non-halogen-based thermoplastic resin forming the transparent resin layer include polyethylene terephthalate, polybutylene terephthalate, polyamide, polyethylene, polypropylene, ethylene-vinyl acetate copolymers, ethylene-acrylic acid copolymers, ethylene-acrylic acid ester copolymers, ionomers, acrylic acid esters, methacrylic acid esters, and like synthetic resins. Of these, polyolefin-based resins, such as polypropylene, are preferable.

The transparent resin layer may contain a non-halogen-based flame retardant within a range in which a degree of transparency that allows the picture pattern layer to be visually recognized from the surface of the decorative sheet can be maintained. The transparent resin layer containing a non-halogen-based flame retardant ensures a highly safe and environmentally friendly decorative sheet.

The transparent resin layer may be colored, as long as it has transparency. In this case, a colorant may be added to the thermoplastic resin. As the colorant, pigments or dyes usable for the picture pattern layer can be used.

The transparent resin layer may contain various kinds of additives, such as a filler, a matting agent, a foaming agent, a lubricant, an antistatic agent, an antioxidant, an ultraviolet absorber, a light stabilizer, a radical scavenger, and a soft component (e.g., rubber).

The thickness of the transparent resin layer is preferably 60 $\mu$m or more, and more preferably 80 $\mu$m or more. The thickness of the transparent resin layer is also preferably 300 $\mu$m or less, and more preferably 200 $\mu$m or less. A lower limit of the thickness of the transparent resin layer within the above range further increases the scratch resistance and wear resistance of the decorative sheet. An upper limit of the thickness of the transparent resin layer within the above range further increases the resistance of the decorative sheet against the spread of fire.

The surface of the transparent resin layer may be subjected to surface treatment, such as corona discharge treatment, ozone treatment, plasma treatment, ionizing radiation treatment, or dichromic acid treatment, as necessary. The surface treatment may be performed in accordance with usual treatment methods.

A primer layer (a primer layer for facilitating formation of a surface-protecting layer) may be formed on the surface of the transparent resin layer.

The primer layer can be formed by applying a known primer agent to the transparent resin layer. Examples of primer agents include urethane resin-based primer agents comprising, for example, an acrylic modified urethane resin, resin-based primer agents comprising a block copolymer of acryl and urethane, and the like.

The thickness of the primer layer is not particularly limited; and is generally about 0.1 to 10 $\mu$m, and preferably about 1 to 5 $\mu$m.

Surface-Protecting Layer

A surface-protecting layer (transparent surface-protecting layer) is provided to impart the surface physical properties that are required for a decorative sheet, such as scratch resistance, wear resistance, water resistance, and stain resistance. Resins for forming the surface-protecting layer preferably include at least one curable resin, such as a thermosetting resin or an ionizing radiation curable resin. In particular, an ionizing radiation curable resin is preferable from the viewpoint of high surface hardness, productivity, and the like. From the viewpoint of further increasing weather resistance, an electron beam curable resin is most preferable.

Examples of thermosetting resins include unsaturated polyester resins, polyurethane resins (including two-component curable polyurethane), epoxy resins, amino alkyd resins, phenol resins, urea resins, diallyl phthalate resins, melamine resins, guanamine resins, melamine-urea copolycondensation resins, silicone resins, polysiloxane resins, and the like.

These resins may contain crosslinking agents, curing agents (e.g., polymerization initiators), and polymerization accelerators. Examples of curing agents include isocyanate, organic sulfonic acid salts, etc. that can be added to unsaturated polyester resins, polyurethane resins, or the like; organic amines etc. that can be added to epoxy resins; peroxides, such as methyl ethyl ketone peroxide, and radical initiators, such as azoisobutylnitrile, that can be added to unsaturated polyester resins.

As the method for forming the surface-protecting layer using a thermosetting resin, for example, a solution of a thermosetting resin is applied by a coating method, such as roll coating or gravure coating; followed by drying and curing. The amount of the solution to be applied is about 5 to 50 $\mu$m, and preferably about 5 to 40 $\mu$m on a solids basis.

The ionizing radiation curable resin is not limited, as long as it induces a crosslinking polymerization reaction upon irradiation with ionizing radiation, and is converted into a three-dimensional polymer structure. For example, one or more types of prepolymers, oligomers, and monomers that have, in the molecule, a polymerizable unsaturated bond crosslinkable by irradiation with ionizing radiation, or an epoxy group can be used. Examples include acrylate resins, such as urethane acrylate, polyester acrylate, and epoxy acrylate; silicone resins, such as siloxane; polyester resins; epoxy resins; and the like.

Examples of ionizing radiation include visible rays, ultraviolet rays (near-ultraviolet rays, vacuum ultraviolet rays, etc.), X rays, electron beams, ionic lines, etc. Of these, ultraviolet rays and electron beams are preferable, and electron beams are more preferable.

Examples of the source of ultraviolet rays include ultra-high-pressure mercury lamps, high-pressure mercury lamps, low-pressure mercury lamps, carbon arc lamps, black-light fluorescent lamps, metal halide lamps, and like light sources. The wavelength of ultraviolet rays is about 190 to 380 nm.

Examples of the source of electron beams include various electron beam accelerators, such as Cockcroft-Walton, Van de Graaff, resonance transformer, insulated core transformer, linear, Dynamitron, and high-frequency accelerators. The energy of the electron beam is preferably about 100 to 1000 keV, and more preferably about 100 to 300 keV. The exposure dose of the electron beam is preferably about 2 to 15 Mrad.

Although the ionizing radiation curable resin is sufficiently cured by irradiation with an electron beam, it is preferable to add a photopolymerization initiator (sensitizer) when the resin is cured by irradiation with ultraviolet rays.

The photopolymerization initiator used in the case of a resin having a radically polymerizable unsaturated group is, for example, at least one of the following: acetophenones, benzophenones, thioxanthones, benzoin, benzoin methyl ether, Michler's benzoyl benzoate, Michler's ketone, diphenyl sulfide, dibenzyl disulfide, diethyl oxide, triphenyl biimidazole, isopropyl-N,N-dimethylaminobenzoate, and the like. Moreover, the photopolymerization initiator used in the case of a resin having a cation polymerizable functional group is, for example, at least one of the following: aromatic diazonium salts, aromatic sulfonium salts, metallocene compounds, benzoin sulfonate, furyloxy sulfoxonium diallyl iodosyl salts, and the like.

The amount of the photopolymerization initiator added is not particularly limited. The amount is generally about 0.1 to 10 parts by mass, relative to 100 parts by mass of the ionizing radiation curable resin.

As a method for forming a protecting layer using an ionizing radiation curable resin, for example, a solution of the ionizing radiation curable resin may be applied by a coating method such as gravure coating or roll coating. The amount of the solution to be applied is about 10 to 50 $\mu$m, and preferably about 15 to 40 $\mu$m on a solids basis.

The thickness of the surface-protecting layer is preferably 4 $\mu$m or more, more preferably 8 $\mu$m or more, even more preferably 10 $\mu$m or more, and particularly preferably 12 $\mu$m or more. The thickness of the surface-protecting layer is also preferably 50 $\mu$m or less, more preferably 40 $\mu$m or less, even more preferably 30 $\mu$m or less, particularly preferably 20 $\mu$m or less, and most preferably 15 $\mu$m or less. A lower limit of the thickness of the surface-protecting layer within the above range further increases the scratch resistance and wear resistance of the decorative sheet. An upper limit of the thickness of the surface-protecting layer within the above range further increases the resistance of the decorative sheet against the spread of fire.

In the present specification, as the thickness of the surface-protecting layer is shown as "ts" in Figs. 1 and 2, when fine particles 17 project from the surface of the surface-protecting layer, a portion other than the projecting fine particles 17 is regarded as the surface of the surface-protecting layer; and the thickness of the surface-protecting layer is measured. As shown in Figs. 1 and 2, when a projection and depression pattern is formed on the decorative sheet by embossing, the thickness of the surface-protecting layer is measured at a portion other than the projection and depression pattern.

To further impart scratch resistance and wear resistance to the surface-protecting layer, or to reduce the gloss, the fine particles 17 may be added, as shown in Figs. 1 and 2. Examples of fine particles include inorganic fillers. Examples of inorganic fillers include aluminum oxide powder, silicon carbide, silicon dioxide, calcium titanate, barium titanate, magnesium pyroborate, zinc oxide, silicon nitride, zirconium oxide, chromium oxide, iron oxide, boron nitride, diamond, emery, glass fiber, and the like.

The average particle size of the fine particles is not particularly limited. To further impart scratch resistance and wear resistance to the surface-protecting layer, the average particle size of the fine particles is preferably greater than the thickness of the surface-protecting layer. Fine particles having an average particle size greater than the thickness of the surface-protecting layer further increase the scratch resistance and wear resistance of the decorative sheet. The average particle size of the fine particles to further impart scratch resistance and wear resistance to the surface-protecting layer is preferably more than 15 $\mu$m, and 50 $\mu$m or less, more preferably 16 to 35 $\mu$m, and most preferably 16 to 20 $\mu$m.

The average particle size of the fine particles used as a matting agent for reducing the gloss of the surface-protecting layer is preferably 3 to 15 $\mu$m, more preferably 4 to 15 $\mu$m, and most preferably 8 to 15 $\mu$m. When the average particle size of the fine particles used as a matting agent is within the above range, the gloss of the surface-protecting layer can be further reduced.

To impart scratch resistance to the surface-protecting layer, fine particles having a smaller average particle size may be used. The average particle size of the fine particles to impart scratch resistance to the surface-protecting layer is preferably 1 to 5 $\mu$m, more preferably 3 to 5 $\mu$m, and even more preferably 3 to 4 $\mu$m. When the average particle size of the fine particles to impart scratch resistance to the surface-protecting layer is within the above range, the scratch resistance of the surface-protecting layer is further increased.

In the present specification, the average particle size of the fine particles is a mode diameter. The mode diameter is a particle size at a local maximum in a particle size distribution and the most frequently occurring particle size.

The amount of the inorganic filler added is about 1 to 80 parts by mass, relative to 100 parts by mass of the ionizing radiation curable resin.

Synthetic Resin Backer Layer

In the decorative sheet of the present invention, the synthetic resin backer layer is one of the layers containing a non-halogen-based thermoplastic resin. The decorative sheet of the present invention preferably comprises the synthetic resin backer layer between the metal layer and the base sheet. The presence of the synthetic resin backer layer further increases the impact resistance of a decorative material.

Examples of resins forming the synthetic resin backer layer include polypropylene, ethylene-vinyl alcohol copolymers, polymethylene, polymethylpentene, polyethylene terephthalate, highly heat-resistant polyalkylene terephthalate (e.g., polyethylene terephthalate prepared by replacing a portion of ethylene glycol with 1,4-cyclohexane dimethanol, diethylene glycol, etc.; "PET-G," trade name (produced by Eastman Chemical Company)), polybutylene terephthalate, polyethylene naphthalate, polyethylene naphthalate-isophthalate copolymers, polycarbonate, polyarylate, polyimide, polystyrene, polyamide, ABS, and the like. These resins can be used singly, or in a combination of two or more.

The thickness of the synthetic resin backer layer is preferably 0.1 to 0.6 mm, more preferably 0.15 to 0.45 mm, and even more preferably 0.20 to 0.40 mm. A lower limit of the thickness of the synthetic resin backer layer within the above range further increases the impact resistance of the decorative sheet. An upper limit of the thickness of the synthetic resin backer layer within the above range further reduces or prevents the warpage of the decorative sheet.

Each of the layers explained above may be laminated, for example, in the following manner. A picture pattern layer (solid colored layer and/or patterned layer) is formed on one surface of a base sheet by printing. Thereafter, a transparent resin layer is formed on the picture pattern layer by the dry lamination method, T-die extrusion method, or the like, with a known adhesive for use in dry lamination, such as a two-component curable urethane resin. A surface-protecting layer is further formed thereon to form an intermediate, and a synthetic resin backer layer prepared by the T-die extrusion method or the like is laminated on the base sheet side of the intermediate by thermal lamination.

The total thickness of the decorative sheet is preferably 110 $\mu$m or more, and more preferably 120 $\mu$m or more. The total thickness of the decorative sheet is also preferably 600 $\mu$m or less, and more preferably 400 $\mu$m or less. A lower limit of the total thickness of the decorative sheet within the above range further increases the scratch resistance and wear resistance of the decorative sheet. An upper limit of the total thickness of the decorative sheet within the above range further increases the resistance of the decorative sheet against the spread of fire.

In the present specification, as the total thickness of the decorative sheet is shown as "td" in Figs. 1 and 2, when the fine particles 17 project from the surface of the surface-protecting layer, a portion other than the projecting fine particles 17 is regarded as the surface of the decorative sheet; and the total thickness of the decorative sheet is measured. As shown in Figs. 1 and 2, when a projection and depression pattern is formed on the decorative sheet by embossing, the total thickness of the decorative sheet is measured at a portion other than the projection and depression pattern.

Embossing may be performed on the decorative sheet from the transparent resin layer side or the surface-protecting layer side to provide a projection and depression pattern. The projection and depression pattern can be formed by hot press, hairline processing, or the like. Examples of the projection and depression patterns include wood-grain vessel patterns, stone-sheet surface projection-depression patterns, textile surface textures, matte patterns, grain patterns, hairline patterns, linear streak patterns, and the like.

In the present specification, the layer thickness, such as the total thickness of the decorative sheet, is a value measured at a portion where the projection and depression pattern is not formed.

The various additives to be added to the layers of the decorative sheet of the present invention (fine particles contained in the surface-protecting layer, a non-halogen-based flame retardant contained in the layers containing a non-halogen-based thermoplastic resin, etc.) are preferably formed into vesicles. The method for forming various additives into vesicles are not particularly limited, and known methods may be used to form the vesicles. Among various methods, the supercritical reverse-phase evaporation method is preferable.

The supercritical reverse-phase evaporation method is described in detail below. The supercritical reverse-phase evaporation method refers to a method of adding an aqueous phase containing various additives as water-soluble or hydrophilic encapsulation materials to a mixture in which a material for forming the outer membrane of the vesicle is evenly dissolved in carbon dioxide in a supercritical state or carbon dioxide at a temperature or a pressure condition equal to or greater than the supercritical point, thereby forming a capsule-like vesicle in which the various additives as encapsulation materials are encapsulated with a single membrane. "Carbon dioxide in a supercritical state" refers to carbon dioxide in a supercritical state at a temperature equal to or greater than the critical temperature (30.98°C), and a pressure equal to or greater than the critical pressure (7.3773±0.0030 MPa); and "carbon dioxide at a temperature or a pressure condition equal to or greater than the critical point" refers to carbon dioxide under a condition in which only the critical temperature or only the critical pressure exceeds the critical condition. This method can produce a single-walled lamellar vesicle having a diameter of 50 to 800 nm. "Vesicle" is the general name of a folliculus having a spherically closed membrane structure containing a liquid phase. In particular, those having an outer membrane formed of a biological lipid, such as a phospholipid, are called "liposomes."

Examples of phospholipids include phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soybean lecithin, hydrogenated soybean lecithin, and like glycerophospholipids; and sphingomyelin, ceramide phosphorylethanolamine, ceramide phosphorylglycerol, and like sphingophospholipids.

Other examples of the materials constituting the outer membrane include nonionic surfactants; and dispersants, such as a mixture of these surfactants and cholesterols or triacylglycerols.

Examples of nonionic surfactants include one or more members selected from polyglycerolether, dialkylglycerol, polyoxyethylene hydrogenated castor oil, polyoxyethylene alkylether, polyoxyethylene sorbitan fatty acid ester, sorbitan fatty acid ester, polyoxyethylene polyoxypropylene copolymers, polybutadiene-polyoxyethylene copolymers, polybutadiene-poly2-vinylpyridine, polystyrene-polyacrylic acid copolymers, polyethylene oxide-polyethyl ethylene copolymers, polyoxyethylene-polycaprolactam copolymers, and the like.

Examples of the cholesterols include one or more members selected from cholesterol, $\alpha$-cholestanol, $\beta$-cholestanol, cholestane, desmosterol (5,24-cholestadiene-3$\beta$-ol), sodium cholate, cholecalciferol, and the like.

The outer membrane of the liposome may be formed from a mixture of a phospholipid and a dispersant. By forming an outer layer as a liposome formed of a phospholipid, the decorative sheet of the present invention ensures desirable compatibility between the resin composition, which is the main component of each layer, and various additives.

Since the decorative sheet of the present invention has the above structure, fire does not readily spread even when the decorative sheet is laminated on a base having low thermal conductivity. Accordingly, the decorative sheet of the present invention can be used as a decorative sheet for laminating on a base having a thermal conductivity of less than 0.1 W/(m·K); and even when the decorative sheet is laminated on such a base, fire does not easily spread. For this reason, the decorative sheet of the present invention can be preferably used as a decorative sheet for interior materials, and particularly preferably as a decorative sheet for floors.

2. Decorative Plate

The decorative plate of the present invention is a decorative plate comprising the decorative sheet mentioned above on a base, wherein the base has a thermal conductivity of less than 0.1 W/(m·K) on the side to which the decorative sheet is bonded.

As a decorative sheet constituting the decorative plate of the present invention, the decorative sheet of the present invention described above can be used.

Base

The base constituting the decorative plate of the present invention has a thermal conductivity of less than 0.1 W/(m·K) on the side to which the decorative sheet is bonded. The thermal conductivity of the base on the side to which the decorative sheet is bonded may be less than 0.08 W/(m·K). In the present specification, the thermal conductivity of the base is measured by the following measurement method.

Method for Measuring Thermal Conductivity of Base

The material forming the layer of the base on the side to which the decorative sheet is bonded is cut into circles, each having a diameter of 40 mm, to prepare samples for measurement. An even number of the samples for measurement are stacked in the thickness direction so that the thickness is more than 15 mm. Subsequently, a sensor is placed in the middle of the number of the stacked samples for measurement, and the thermal conductivity is measured using the hot disk method in accordance with ISO 22007-2:2008. The air layer contained between the adjacent samples for measurement when the samples are stacked is negligible.

An example of the method for measuring thermal conductivity is described below. Corks each having a diameter of 40 mm and a thickness of 1.5 mm were prepared as samples for measurement. 30 samples for measurement are stacked so that the total thickness of the samples is more than 15 mm when they are stacked, thereby obtaining a 45-mm-thick stack. Subsequently, a sensor is placed between the 15th and 16th samples for measurement (22.5 mm position), i.e., at half the thickness of the stack, and the thermal conductivity is measured using the hot disk method in accordance with ISO 22007-2:2008.

In the case of using corks each having a thickness of 2.0 mm as samples for measurement, if 20 samples are stacked, the thickness of the resulting stack is 40 mm; thus, a sensor is placed between the 10th and 20th samples for measurement.

In the case of using corks each having a thickness of 1.0 mm as samples for measurement, if 40 samples are stacked, the thickness of the resulting stack is 40 mm; thus, a sensor is placed between the 20th and 21st samples for measurement.

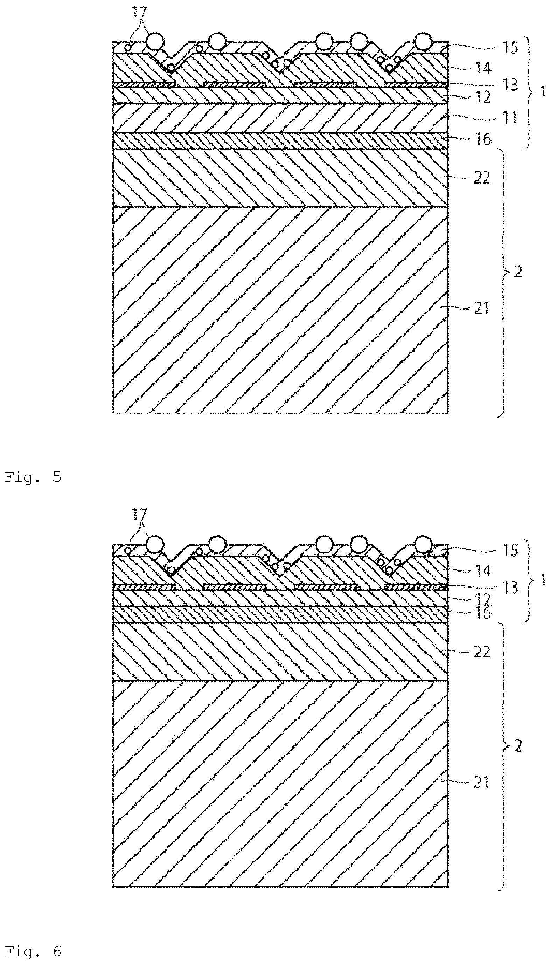

The material of the base is not particularly limited, as long as it exhibits a thermal conductivity in the above range. For example, as shown in Fig. 3, a wooden base material obtained by laminating a surface material 22 made of a material having a thermal conductivity in the above range on a wooden plate 21 usually used for a decorative plate such as a floor decorative plate may be used. Figs. 4 and 5 each show an example of the layer structure of the decorative plate of the present invention that uses the base shown in Fig. 3. In Figs. 4 and 5, the surface material 22 of the base 2 and the metal layer 16 of the decorative sheet 1 are bonded, and the decorative sheet 1 is thereby laminated on the base 2 to form a decorative plate.

The surface material can be made of any material having a thermal conductivity within the above range. Examples include cork, paulownia, and the like. Of these, cork is preferably used, because warmth retention properties and cushioning properties can be imparted to the decorative plate. That is, the base preferably includes a cork layer on the decorative sheet side.

The thickness of the surface material is not particularly limited; and is preferably 1.0 to 5.0 mm, and more preferably 1.0 to 2.0 mm.

The wooden plate is not particularly limited, and examples include medium-density fiberboard (MDF), high-density fiberboard (HDF), plywood, and the like. Of these, medium-density fiberboard (MDF) and high-density fiberboard (HDF) are preferably used.

The thickness of the wooden plate is not particularly limited; and is preferably 4.0 to 15.0 mm, and more preferably 5.0 to 10.0 mm.

The method for laminating the surface material and the wooden plate is not particularly limited, and lamination can be performed by a conventionally known method; e.g., by using an adhesive. The adhesive is not particularly limited, and known woodworking adhesives may be widely used. Examples of adhesives include adhesives containing, as an active ingredient, polyvinyl acetate, polyvinyl chloride, vinyl chloride-vinyl acetate copolymers, ethylene-acrylic acid copolymers, ionomers, butadiene-acrylic nitrile rubber, neoprene rubber, natural rubber, or the like. Examples also include thermosetting adhesives, such as melamine-based adhesives, phenol-based adhesives, urea-based (vinyl acetate-urea-based) adhesives, and the like.

The method for laminating the decorative sheet on the front surface of the base is not particularly limited. The decorative sheet may be laminated by a conventionally known method; e.g., by forming an adhesive layer on the front surface of the base.

The thickness of the adhesive layer is not particularly limited; and the thickness after drying is preferably 0.1 to 100 $\mu$m, more preferably 0.1 to 30 $\mu$m, even more preferably 1 to 20 $\mu$m.

Examples of the adhesive used in the adhesive layer include water-soluble emulsion-based adhesives, polyester-based adhesives, acrylic adhesives, urethane-based adhesives, and the like. These adhesives can be used singly, or in a combination of two or more.

Since the decorative plate of the present invention has the above structure, fire does not easily spread. For this reason, the decorative plate of the present invention can be suitably used as a decorative plate for interior materials, especially as a decorative plate for floors.

Examples

The present invention is described in more detail below with reference to Examples and Comparative Examples. However, the present invention is not limited thereto.

Example 1

Production of Decorative Sheet

A 60-$\mu$m-thick polypropylene film was prepared as a base sheet. Subsequently, both surfaces of the base sheet were subjected to corona discharge treatment; then, a primer layer formed from a two-component curable urethane resin was formed on the back surface of the base sheet, and a picture pattern layer was formed on the front surface of the base sheet using an acrylic urethane-based resin-containing curable printing ink by the gravure printing method. Moreover, an adhesive of two-component curable urethane resin was applied to the picture pattern layer to form a transparent adhesive layer. Further, a polypropylene resin was thermally melted and extruded on the adhesive layer using a T-die extruder, thereby forming a thermoplastic transparent resin layer (thickness: 60 $\mu$m).

Subsequently, a two-component curable urethane resin primer layer was formed on the transparent resin layer. Moreover, an electron beam curable resin composition containing a urethane (meth) acrylate oligomer was applied to the primer layer by the gravure coating method, followed by drying; after which irradiation with an electron beam was conducted at an acceleration voltage of 175 keV with a dose of 5 Mrad (50 kGy), thereby forming a surface-protecting layer having a thickness of 15 $\mu$m. Silica was added as fine particles to the surface-protecting layer. The average particle size of the silica to further impart scratch resistance and wear resistance to the surface-protecting layer was 18 $\mu$m. The average particle size of the silica added as a matting agent was 12 to 13 $\mu$m. The average particle size of the silica is a mode diameter, i.e., a particle size at a local maximum in a particle size distribution and the most frequently occurring particle size.

Additionally, embossing was performed from the surface-protecting layer side by thermal pressure to form a wood-grain vessel projection-depression pattern.

Subsequently, an adhesive of two-component curable urethane resin was applied to the back surface of the base sheet to form a transparent adhesive layer. Further, aluminum foil (thickness: 11 $\mu$m, thermal conductivity measured by the hot disk method: 237 W/(m·K)) was laminated through the adhesive layer to form a metal layer. A back-side primer layer of two-component curable urethane resin was then formed on the back surface of the metal layer. The decorative sheet of Example 1 was thus formed.

The decorative sheet comprises curable resin layers, such as a back-side primer layer and an adhesive layer; however, since the curable resin layers are different from the non-halogen-based thermoplastic resin layers, they are not considered in equation (I).

Production of Decorative Plate

A cork sheet having a thickness of 1.5 mm and a thermal conductivity of 0.07 W/(m·K) was bonded to 4-mm-thick medium-density fiberboard (MDF) with an adhesive to prepare a wooden base material. The thermal conductivity of the cork sheet was measured using the following measurement method.

Method for Measuring Thermal Conductivity of Cork Sheet

Cork sheets each having a diameter of 40 mm and a thickness of 1.5 mm was prepared as samples for measurement. 30 samples for measurement were stacked so that the total thickness of the samples was more than 15 mm when they were stacked, thereby obtaining a 45 mm-thick stack. Subsequently, a sensor was placed between the 15th and 16th samples for measurement (22.5 mm position), i.e., at half the thickness of the stack, and the thermal conductivity was measured using the hot disk method in accordance with ISO 22007-2:2008.

The metal layer side of the decorative sheet was bonded to the cork sheet side of the wooden base material with a water-soluble emulsion-based adhesive to prepare a decorative plate. The water-soluble emulsion-based adhesive used was the following:

- Water-soluble emulsion-based adhesive

Base Resin: BA-10L, Japan Coating Resin Co., Ltd., modified-ethylene-vinyl acetate-based resin
Curing Agent: BA-11B, Japan Coating Resin Co., Ltd., isocyanate-based agent
Compositional Ratio: base resin:curing agent=100:2.5 (on a mass basis)

Examples 2 to 13 and Comparative Examples 1 to 6

Decorative sheets and decorative plates were obtained in the same manner as in Example 1, except that the structure of the decorative sheet was as shown in Tables 1 and 2. In the tables, "0" in the item regarding the thickness of the synthetic resin backer layer or the thickness of the metal layer indicates that the synthetic resin backer layer or the metal layer is not formed. In the decorative sheets of Examples 10 and 11, and Comparative Examples 2 and 3, a resin layer made of a resin composition containing a polypropylene resin was laminated on the back surface of the base sheet by a melt-extrusion lamination method to thereby form a synthetic resin backer layer (specific gravity: 1.08); an adhesive layer, a metal layer, and a back-side primer layer were formed as in Example 1 on the back surface of the synthetic resin backer layer; and the decorative sheets were thus obtained.

Evaluation

The decorative sheets and decorative plates of the Examples and Comparative Examples obtained as above were evaluated in the following manner.

(1) Resistance Against Spread of Fire

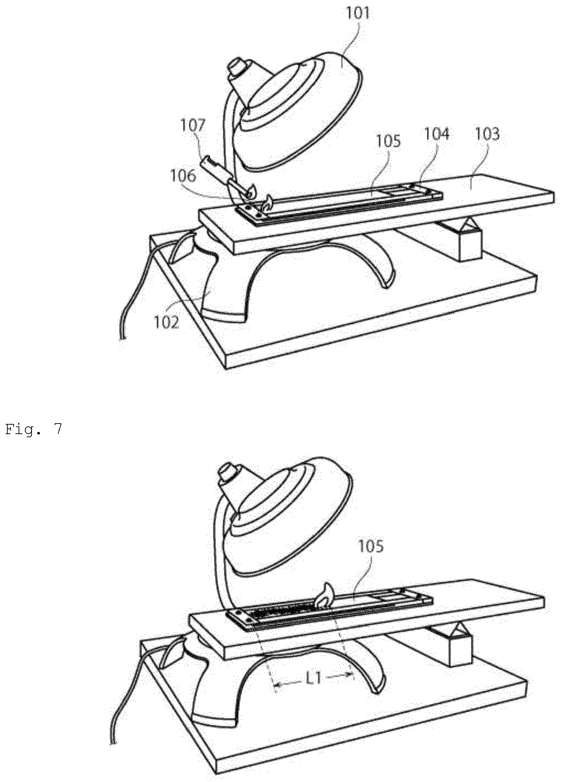

A decorative plate was cut into a size of 9 cm × 30 cm to make a test piece. As shown in Figs. 6 and 7, a rectangular metal platform 103 was placed on a stand 102 of a commercially available household heater 101 (Zaigle Handsome SJ-100 (trade name)), and a test piece 105 was placed in a metal frame 104 set on the platform. The resistance against the spread of fire was tested under the conditions of a heater angle of 45° and a heater output dial of 4. Specifically, the test piece was pre-heated for 2 minutes using the household heater. Then, as shown in Fig. 6, the end 106 on the heater side in the longitudinal direction of the test piece was heated with a lighter 107 for 1 minute to ignite; and the fire spread in the longitudinal direction of the test piece 105, as shown in Fig. 7. Subsequently, the state of the spread of fire was visually observed for 17 minutes, and the fire spread distance (L1) was measured. According to the following evaluation criteria, the fire-extinguishing properties and the fire spread distance were measured to evaluate the resistance against the spread of fire.

Fire-Extinguishing Properties

++: The fire self-extinguished.
-: The fire did not self-extinguish.

Fire Spread Distance (L1)

++: L1 was 5 cm or less.
+: L1 was more than 5 cm, and 10 cm or less.
-: L1 was more than 10 cm.

Evaluation of Resistance Against Spread of Fire

+++: The fire-extinguishing properties and the fire spread distance were determined to be ++.
++: The fire-extinguishing properties were determined to be ++, and the fire spread distance was determined to be +.
-: At least one of the fire-extinguishing properties and the fire spread distance was determined to be -.

(2) Scratch Resistance Test

The scratch resistance of a decorative sheet was investigated using a Hoffman scratch tester (produced by BYK-Gardner). Specifically, a decorative sheet was bonded to 2.5-mm-thick MDF using an adhesive (water-soluble emulsion adhesive (BA-10L/BA-11B)) to prepare a test piece. A scratch blade (the edge portion of a 7-mm-diameter cylinder) was set so as to be in contact with the surface-protecting layer of the decorative sheet of the test piece at an angle of 45°, and the scratch blade was pulled to scratch the surface. In this test, the load applied to the scratch blade was changed in 100-g increments within the range of 100 to 700 g, and whether a scratch was formed on the surface-protecting layer was investigated. The load with which a scratch was made for the first time was defined as the scratch load, and evaluation was conducted according to the following evaluation criteria.

++: The scratch load was a 400-g load or more.
-: The scratch load was a 300-g load or less.

(3) Wear Resistance Test

The wear resistance of a decorative sheet was investigated. Specifically, a decorative sheet was bonded to 2.5-mm-thick MDF using an adhesive (water-soluble emulsion adhesive (BA-10L/BA-11B)) to prepare a test piece. A test was performed using the test piece in accordance with JAS flooring wear test A. The surface condition of the decorative sheet of each test piece after the test was visually observed and evaluated according to the following evaluation criteria.

++: Shaving of the picture pattern was not observed after a 500-rotation test.
-: Shaving of the picture pattern was observed after a 500-rotation test.

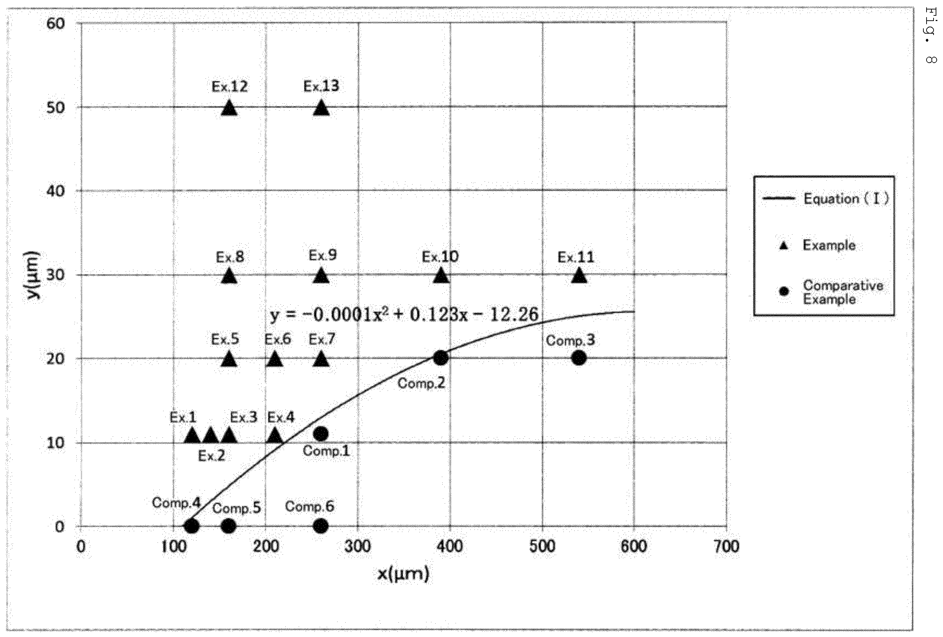

Tables 1 and 2 show the results. Fig. 8 shows the relationship between the total thickness (x) of the layers containing a non-halogen-based thermoplastic resin and the thickness (y) of the metal layer. Tables 1 and 2 and Fig. 8, for reference, show the value of $y = -0.0001x^2 + 0.123x - 12.26$, which indicates the threshold value of y in equation (I); and a graph. In Fig. 8, "Ex. 1," "Ex. 2," ... indicate "Example 1," "Example 2," ...; and "Comp. 1," "Comp. 2," ... indicate "Comparative Example 1," "Comparative Example 2," ...

Table 1

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| Layer thickness | Surface-protecting layer ($\mu$m) | | 15 | 15 | 15 | 15 | 15 | 15 | 15 | 15 | 15 | 15 |
| | Layer containing non-halogen-based thermoplastic resin | Transparent resin layer ($\mu$m) | 60 | 80 | 100 | 150 | 100 | 150 | 200 | 200 | 80 | 80 |
| | | Base sheet ($\mu$m) | 60 | 60 | 60 | 60 | 60 | 60 | 60 | 60 | 60 | 60 |
| | | Synthetic resin backer layer ($\mu$m) | 0 | 0 | 0 | 0 | 0 | 0 | 0 | 0 | 250 | 400 |
| | Total thickness of layers containing non-halogen-based thermoplastic resin x ($\mu$m) | | 120 | 140 | 160 | 210 | 160 | 210 | 260 | 260 | 390 | 540 |
| | Metal layer y ($\mu$m) | | 11 | 11 | 11 | 11 | 20 | 20 | 20 | 11 | 20 | 20 |
| Reference | $y=-0.0001x^2+0.123x-12.26$ | | 1 | 3 | 5 | 9 | 5 | 9 | 13 | 13 | 21 | 25 |
| Resistance against spread of fire | Fire-extinguishing properties | | ++ | ++ | ++ | ++ | ++ | ++ | ++ | ++ | ++ | ++ |
| | Fire spread distance | | ++ | ++ | ++ | + | ++ | ++ | + | - | - | - |
| | Evaluation of resistance against spread of fire | | +++ | +++ | +++ | ++ | +++ | +++ | ++ | - | - | - |
| Scratch resistance | | | ++ | ++ | ++ | ++ | ++ | ++ | ++ | ++ | ++ | ++ |
| Wear resistance | | | ++ | ++ | ++ | ++ | ++ | ++ | ++ | ++ | ++ | ++ |

Table 2

| | | | Example 8 | Example 9 | Example 10 | Example 11 | Example 12 | Example 13 | Comparative Example 4 | Comparative Example 5 | Comparative Example 6 |
|---|---|---|---|---|---|---|---|---|---|---|---|
| Layer thickness | Surface-protecting layer ($\mu$m) | | 15 | 15 | 15 | 15 | 15 | 15 | 15 | 15 | 15 |
| | Layer containing non-halogen-based thermoplastic resin | Transparent resin layer ($\mu$m) | 100 | 200 | 80 | 80 | 100 | 200 | 60 | 100 | 200 |
| | | Base sheet ($\mu$m) | 60 | 60 | 60 | 60 | 60 | 60 | 60 | 60 | 60 |
| | | Synthetic resin backer layer ($\mu$m) | 0 | 0 | 250 | 400 | 0 | 0 | 0 | 0 | 0 |
| | Total thickness of layers containing non-halogen-based thermoplastic resin x ($\mu$m) | | 160 | 260 | 390 | 540 | 160 | 260 | 120 | 160 | 260 |
| | Metal layer y ($\mu$m) | | 30 | 30 | 30 | 30 | 50 | 50 | 0 | 0 | 0 |
| Reference | $y=-0.0001x^2+0.123x-12.26$ | | 5 | 13 | 21 | 25 | 5 | 13 | 1 | 5 | 13 |
| Resistance against spread of fire | Fire-extinguishing properties | | ++ | ++ | ++ | ++ | ++ | ++ | ++ | ++ | - |
| | Fire spread distance | | ++ | ++ | ++ | ++ | ++ | ++ | - | - | - |
| | Evaluation of resistance against spread of fire | | +++ | +++ | +++ | +++ | +++ | +++ | - | - | - |
| Scratch resistance | | | ++ | ++ | ++ | ++ | ++ | ++ | ++ | ++ | ++ |
| Wear resistance | | | ++ | ++ | ++ | ++ | ++ | ++ | ++ | ++ | ++ |

Description of Reference Numerals

1. Decorative sheet
11. Synthetic resin backer layer
12. Base sheet
13. Picture pattern layer
14. Transparent resin layer
15. Surface-protecting layer
16. Metal layer
17. Fine particles
2. Base
21. Wooden plate
22. Surface material
101. Household heater
102. Strand of household heater
103. Rectangular metal platform
104. Metal frame
105. Test piece
106. End on the heater side in the longitudinal direction of the test piece
107. Lighter
L1. Fire spread distance

**Claims**

1. A decorative sheet for laminating on a base having a thermal conductivity of less than 0.1 W/(m·K) on a side to which the decorative sheet is bonded, wherein

   (1) the decorative sheet comprises a metal layer having a thermal conductivity of 10 W/(m·K) or more,
   (2) the decorative sheet comprises a plurality of layers containing a non-halogen-based thermoplastic resin, and
   (3) the decorative sheet satisfies the following equation (I)

$$y \geq -0.0001x^2 + 0.123x - 12.26 \; (I),$$

   where x is the total thickness ($\mu$m) of the layers containing a non-halogen-based thermoplastic resin, and y is the thickness ($\mu$m) of the metal layer.

2. The decorative sheet according to claim 1, wherein the metal layer is an aluminum foil.

3. The decorative sheet according to claim 1 or 2, wherein the decorative sheet comprises the metal layer on a side that comes into contact with the base.

4. The decorative sheet according to any one of claims 1 to 3, wherein the decorative sheet comprises a transparent resin layer as one of the layers containing a non-halogen-based thermoplastic resin, and the transparent resin layer has a thickness of 60 $\mu$m or more.

5. The decorative sheet according to any one of claims 1 to 4, further comprising a surface-protecting layer.

6. The decorative sheet according to claim 5, wherein the surface-protecting layer is an ionizing radiation curable resin layer.

7. The decorative sheet according to claim 6, wherein the ionizing radiation curable resin layer is an electron beam curable resin layer.

8. The decorative sheet according to any one of claims 5 to 7, wherein the surface-protecting layer has a thickness of

15 μm or more.

9. The decorative sheet according to any one of claims 5 to 8, wherein the surface-protecting layer comprises fine particles, and the fine particles have an average particle size greater than the thickness of the surface-protecting layer.

10. The decorative sheet according to claim 9, wherein the fine particles are in the form of a vesicle formed by a supercritical reverse-phase evaporation method.

11. The decorative sheet according to any one of claims 1 to 10, wherein the total thickness of the layers containing a non-halogen-based thermoplastic resin is 110 to 600 μm.

12. The decorative sheet according to any one of claims 1 to 11, wherein the decorative sheet has a total thickness of 120 μm or more.

13. A decorative plate comprising the decorative sheet according to any one of claims 1 to 12 on a base, wherein the base has a thermal conductivity of less than 0.1 W/(m·K) on a side to which the decorative sheet is bonded.

14. The decorative plate according to claim 13, wherein the base comprises a cork layer as a layer on a side to which the decorative sheet is bonded.

Fig. 1

Fig. 2

Fig. 3

Fig. 4

Fig. 5

Fig. 6

Fig. 7

Fig. 8

## INTERNATIONAL SEARCH REPORT

International application No.

PCT/JP2019/004803

### A. CLASSIFICATION OF SUBJECT MATTER
Int.Cl. B32B15/08(2006.01)i, E04B1/94(2006.01)i

According to International Patent Classification (IPC) or to both national classification and IPC

### B. FIELDS SEARCHED
Minimum documentation searched (classification system followed by classification symbols)
Int.Cl. B32B1/00-43/00, E04B1/62-1/99, E04C2/00-2/54

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-205733 A (TOPPAN PRINTING CO., LTD.) 31 July 2001, claims 1-5, paragraphs [0001]-[0003], [0018], [0027], [0038], [0047], fig. 2 (Family: none) | 1-8, 11-12<br>1-14 |
| Y | JP 2001-348989 A (ASAHI FIBER GLASS CO., LTD.) 21 December 2001, claims 1, 5, paragraphs [0007], [0009]-[0011] (Family: none) | 1-14 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 April 2019 (25.04.2019) | Date of mailing of the international search report<br>14 May 2019 (14.05.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

# EP 3 753 727 A1

**INTERNATIONAL SEARCH REPORT**

International application No.

PCT/JP2019/004803

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2017-19274 A (DAINIPPON PRINTING CO., LTD.) 26 January 2017, claims 1, 4, 10, 11, paragraphs [0043]-[0050] (Family: none) | 9-10 |
| Y | WO 2016/076360 A1 (TOPPAN COSMO INC.) 19 May 2016, claims 1, 19, paragraphs [0048]-[0055] & US 2018/0186132 A1 (claims 1, 19, paragraphs [0060]-[0070]) & EP 3219488 A1 & KR 10-2017-0084083 A & CN 107073913 A | 9-10 |
| A | JP 2015-182379 A (DAINIPPON PRINTING CO., LTD.) 22 October 2015, entire text (Family: none) | 1-14 |
| A | JP 11-131682 A (NODA CORPORATION) 18 May 1999, entire text (Family: none) | 1-14 |
| A | JP 2004-202971 A (MITSUBISHI PLASTICS, INC.) 22 July 2004, entire text (Family: none) | 1-14 |
| A | JP 2016-64628 A (DAINIPPON PRINTING CO., LTD.) 28 April 2016, entire text & WO 2015/105168 A1 & EP 3098071 A1 & KR 10-2016-0107252 A & CN 105899362 A | 1-14 |
| A | US 2013/0202857 A1 (FRITZ EGGER GMBH & CO. OG) 08 August 2013, whole document & WO 2012/113652 A2 | 1-14 |

Form PCT/ISA/210 (continuation of second sheet) (January 2015)

## REFERENCES CITED IN THE DESCRIPTION

### Patent documents cited in the description

- JP 2015182379 A